# EUROPÄISCHE PATENTANMELDUNG

(11) **EP 1 277 791 A1**
(43) Veröffentlichungstag der Anmeldung: **22.01.2003**
(21) Anmeldenummer: 02014917.5
(22) Anmeldetag: 05.07.2002
(51) Int. Cl.: C08K 5/053, C08K 5/06, C08L 21/00

(54) **1,4-Butendiol(polyether) enthaltende Kautschukmischungen**

(30) Priorität: 18.07.2001 DE 10135014
(71) Anmelder: Bayer Aktiengesellschaft, 51368 Leverkusen (DE)
(72) Erfinder: Scholl, Thomas, Dr., deceased (DE); Weidenhaupt, Hermann-Josef, Dr., 50259 Pulheim (DE)

(57) **Zusammenfassung**

Die vorliegende Erfindung betrifft Kautschukmischungen mit verbessertem Verarbeitunsverhalten und hoher Füllstoffaktivität enthaltend 1,4-Butendiol und/oder 1,4-Butendiolpolyether sowie die Verwendung der Kautschukmischungen zur Herstellung von Vulkanisaten, insbesondere zur Herstellung von hochverstärkten, abriebbeständigen Formkörpern, besonders bevorzugt zur Herstellung von Reifen, die einen niedrigen Rollwiderstand und einen hohen Abriebwiderstand aufweisen.

## Beschreibung

Die vorliegende Erfindung betrifft Kautschukmischungen, die neben mindestens einem Kautschuk 1,4-Butendiol und/oder 1,4-Butendiolpolyether sowie Füllstoffe enthalten, sowie die Verwendung der Kautschukmischungen zur Herstellung von Vulkanisaten, insbesondere zur Herstellung von hochverstärkten, abriebbeständigen Formkörpern, besonders bevorzugt zur Herstellung von Reifen, die einen niedrigen Rollwiderstand und einen hohen Abriebwiderstand aufweisen.

Zur Herstellung von Reifen mit verringertem Rollwiderstand sind eine Reihe von Lösungsvorschlägen ausgearbeitet worden. In DE-A-2 255 577 und 4 435 311, EP-A1 0 670 347 sowie US-A-4 709 065 sind bestimmte polysulfidische Silane als Verstärkungsadditive für kieselsäurehaltige Kautschukvulkanisate beschrieben worden. Nachteilig bei der Verwendung der dort beschriebenen polysulfidischen Silane als Verstärkungsadditive für kieselsäurehaltige Kautschukvulkanisate ist jedoch, dass zur Erreichung einer akzeptablen Vereinbarbeit relativ große Mengen der teueren polysulfischen Silane erforderlich sind.

Zur Verbesserung der Verarbeitung von kieselsäurehaltigen Kautschukmischungen wurden weitere Zusatzstoffe vorgeschlagen, wie Fettsäureester, Fettsäuresalze oder Mineralöle. Die genannten Zusatzstoffe besitzen den Nachteil, dass sie die Fließfähigkeit erhöhen, gleichzeitig aber die Spannungswerte bei größerer Dehnung (z.B. 100 bis 300 %) vermindern, so dass die verstärkende Wirkung des Füllstoffs Einbuße erleidet.

Darüber hinaus war es bekannt, Polyalkohole und Polyglykole Kautschukmischungen zuzugeben. So werden in EP-A1 0 869 145 und EP-A1 0 738 755 Kautschukmischungen beschrieben, die bestimmte Polyethylenoxide enthalten. Die Strukturen der eingesetzten Polyether werden nicht offenbart. Die genannten Polyethylenoxide verbessern gemäß der Lehre der angeführten Dokumente die Verarbeitbarkeit der unvulkanisierten Kautschukmischungen kaum, sondern wirken sich vor allem auf die Vulkanisateigenschaften, insbesondere auf die antistatischen Eigenschaften und auf das Abriebverhalten, aus.

Kautschukmischungen mit bestimmten 1,2- und 1,3-Diolen sind aus EP-A 761 734 bekannt. Diese 1,2- und 1,3-Diole enthaltende Kautschukmischungen neigen jedoch zum Kleben der Mischungen auf der Walze und zu verschlechterten mechanischen Eigenschaften der Vulkanisate.

Aufgabe der vorliegenden Erfindung war es daher Zusatzstoffe zu finden, die u.a. die Fließfähigkeit von Kautschukmischungen verbessern, ohne die Aktivität der in den Mischungen enthaltenden Füllstoffe zu reduzieren, und Vulkanisate mit guten Eigenschaften liefern, insbesondere im Hinblick auf Abrieb, Rollwiderstand und Naßrutschfestigkeit bei Reifen.

Es wurden nun gefunden, dass 1,4-Butendiol und 1,4-Butendiolpolyether die Fließfähigkeit von Kautschukmischungen deutlich verbessern und zu Vulkanisaten mit gutem Verstärkungsverhalten, günstiger dynamischer Dämpfung und gutem Abriebverhalten führen.

Gegenstand der vorliegenden Erfindung sind daher Kautschukmischungen bestehend aus mindestens einem Kautschuk, 0,05 bis 25 Gew.-Teilen, bezogen auf 100 Gewichtsteile an eingesetztem Kautschuk, 1,4-Butendiol oder 1,4-Butendiolpolyether oder Mischungen derselben, wobei der Butendiolpolyether der Struktur 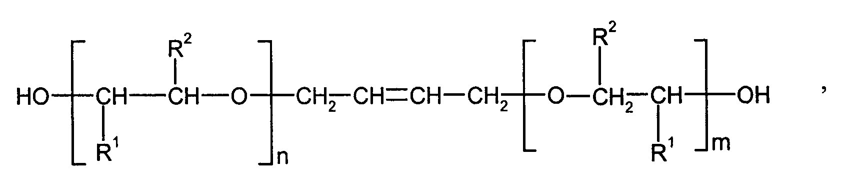 worin
- R¹ und R²: unabhängig voneinander für Wasserstoff oder einen C₁ bis C₄-Alkylrest, bevorzugt Methyl, Ethyl, stehen und
- n und m: unabhängig voneinander für ganze Zahlen von 0 bis 10, bevorzugt 0 bis 5 stehen, mit der Maßgabe, dass n und m nicht gleichzeitig 0 sein können,
entspricht, sowie 1 bis 500 Gewichtsteile Füllstoff, bezogen auf 100 Gewichtsteile an eingesetztem Kautschuk.

Bevorzugt werden Butendiole oder dessen Polyether eingesetzt, die 0,1 bis 10 Mol Ethylenoxid und/oder Propylenoxid pro Hydroxylgruppen, besonders bevorzugt 0,7 bis 7 Mol Ethylenoxid und/oder Propylenoxid pro Mol Hydroxylgruppen besitzen und Molgewichte im Bereich von 88 bis 1500, bevorzugt im Bereich von 88 bis 700 aufweisen. Ganz besonders bevorzugt sind die entsprechenden Polyether auf Basis von cis-1,4-Butendiol. Die Herstellung derartiger Additions- und Polyadditionsprodukte an 1,4-Butendiol sind Stand der Technik und beispielsweise in Houben-Weyl, Methoden der organischen Chemie, Band XIV/2, Thieme Verlag, Stuttgart, 1963, Seiten 436-440 und Seite 450 beschrieben. Derartige Polyether sind im Handel auch erhältlich und werden herstellungsbedingt bevorzugt als eine Mischung der entsprechenden Polyethylenoxide und Polypropylenoxide eingesetzt. Bevorzugt enthalten die erfindungsgemäßen Kautschukmischungen das 1,4-Butendiol oder dessen Polyether der obigen Formel in Mengen von 0,3 bis 15 Gew.-Teilen, insbesondere in Mengen von 0,5 bis 6 Gew.-Teilen, ganz besonders bevorzugt in Mengen von 1 bis 5 Gew.-Teilen.

Die zur Herstellung der erfindungsgemäßen Kautschukmischungen einzusetzenden Kautschuke umfassen Naturkautschuk und Synthesekautschuke. Bevorzugte Synthesekautschuke sind beispielsweise bei W. Hofmann, Kautschuktechnologie, Genter Verlag, Stuttgart 1980, beschrieben. Sie umfassen u.a.

| | |
|---|---|
| BR - | Polybutadien |
| ABR - | Butadien/Acrylsäure-C₁-C₄-alkylester-Copolymere |
| CR - | Polychloropren |
| IR - | Polyisopren |
| SBR - | Styrol/Butadien-Copolymerisate mit Styrolgehalten von im Bereich von 1-60, vorzugsweise im Bereich von 20-50 Gew.-% |
| IIR - | Isobutylen/Isopren-Copolymerisate |
| NBR - | Butadien/Acrylnitril-Copolymere mit Acrylnitrilgehalten von im Bereich von 5-60, vorzugsweise im Bereich von 10-40 Gew.-% |
| HNBR - | teilhydrierter oder vollständig hydrierter NBR-Kautschuk |
| EPDM - | Ethylen/Propylen/Dien-Copoylmerisate |

sowie Mischungen dieser Kautschuke.

Für die Herstellung von Kraftfahrzeugreifen sind insbesondere Mischungen von Naturkautschuk, Emulsions-SBR- sowie Lösungen-SBR- und Polybutadien Kautschuk von Bedeutung.Von besonderem Interesse ist der Einsatz von Lösungs-SBR-Kautschuken mit einem Vinylgehalt im Bereich von 20-60 Gew.-% sowie von Polybutadienkautschuken mit einem hohen 1,4-cis-Gehalt (> 90 %), der mit Katalysatoren auf Basis von Nickel, Kobalt, Titan und/oder Neodym hergestellt wurde, sowie Polybutadienkautschuk mit einem Vinylgehalt von bis zu 75 % sowie die Mischungen der genannten Lösungs-SBR und Polybutadienkautschuke. Ganz besonders bevorzugt sind entsprechende Lösungs-SBR und Polybutadienkautschuke mit einem zusätzlichen Gehalt an gebundenen funktionellen Gruppen, insbesondere Hydroxyl- und/oder Carboxylgruppen. Bevorzugte Gehalte an Hydroxyl- und/oder Carbonylgruppen liegen im Bereich von 0,05 bis 3 Gew.-%, bezogen auf Kautschuk. Besonders bevorzugte erfindungsgemäße Kautschuke werden z.B. in den deutschen Patentanmeldungen DE-A1 19 832 549, DE-A1 19 852 648, DE-A1 19 914 848, DE-A1 19 920 788, DE-A1 19 920 814 sowie DE-A 2 653 144 und EP A1 0 464 478 beschrieben.

Weiterhin enthalten die erfindungsgemäßen Kautschukmischungen bevorzugt 5 bis 300 Gew.-Teile Füllstoffe. Als Füllstoffe eignen sich vor allem oxidische und/oder silikatische Füllstoffe und/oder Ruße. Bevorzugt sind oxidische und/oder silikatische Füllstoffe.

Als bevorzugt einzusetzende oxidische und/oder silikatische Füllstoffe kommen in Frage:
- hochdisperse Kieselsäure, hergestellt z.B. durch Fällung von Lösungen von Silikaten oder Flammenhydrolyse der Silikate, von Siliciumhalogeniden mit spezifischen Oberflächen im Bereich von 5-1000, vorzugsweise im Bereich von 20-400 m²/g (BET-Oberfläche) und mit Primärteilchengröße von im Bereich von 10-400 nm. Die Kieselsäuren können gegebenenfalls auch als Mischoxide mit anderen Metalloxiden, wie Al-, Mg-, Ca-, Ba-, Zn-, Zr-, Tioxiden vorliegen.
- Synthetische Silikate, wie Aluminiumsilikat, Erdalkalisilikate, wie Magnesiumsilikat oder Calciumsilikat, mit BET-Oberflächen von im Bereich von 20-400 m²/g und Primärteilchendurchmessern von im Bereich von 10-400 nm.
- Natürliche Silikate, wie Kaolin und andere natürlich vorkommende Kieselsäuren.
- Glasfasern und Glasfaserprodukte (Matten, Stränge) oder Mikroglaskugeln.
- Metalloxide, wie Zinkoxid, Calciumoxid, Magnesiumoxid, Aluminiumoxid.
- Metallcarbonate, wie Magnesiumcarbonat, Calciumcarbonat, Zinkcarbonat.
- Metallhydroxide, wie Aluminiumhydroxid, Magnesiumhydroxid.

Wie erwähnt, eignen sich auch Ruße als Füllstoffe. Sie werden nach dem Flammruß, Furnace- oder Gasrußverfahren hergestellt und besitzen im allgemeinen BET-Oberflächen von 20 bis 200 m²/g, wie z.B. SAF-, ISAF-, HAF-, FEF- oder GPF-Ruße.

Besonders bevorzugt werden als Füllstoffe bei den erfindungsgemäßen Kautschukmischungen ein Gemisch aus 10 bis 100 Gew.-Teilen an oxidischen und/oder silikatischen Füllstoffen und 5 bis 50 Gew.-Teile Ruß eingesetzt, bezogen auf 100 Gew.-Teile an eingesetztem Kautschuk.

Zur Herstellung von Kautschukvulkanisaten können noch die bekannten und dafür üblichen Kautschukhilfsmitteln den erfindungsgemäßen Kautschukmischungen zugegeben werden, insbesondere Vulkanisationsbeschleuniger, Alterungschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide, Vernetzer sowie Aktivatoren. In diesem Zuammenhang verweisen wir auf I. Franta, Elastomers and Rubber Compounding Materials, Elsevier 1989, S. 325-494.

Die Kautschukhilfsmittel werden in üblichen Mengen, die sich unter anderem nach dem Verwendungszweck richten, eingesetzt. Übliche Mengen sind z.B. Mengen im Bereich von 0,1-50 Gew.-%, bezogen auf die Gesamtmenge an eingesetzten Kautschuken.

Darüber hinaus können bei der Herstellung von Kautschukvulkaniaten noch die bekannten Vernetzer, wie Schwefel, Schwefelspender oder Perioxide eingesetzt werden. Außerdem können selbstverständlich noch Vulkanisationsbeschleuniger, wie Mercaptobenzthiazole, Guanidine, Thiurame, Dithiocarbamate, Thioharnstoffe und/oder Thiocarbonate den erfindungsgemäßen Kautschukmischungen zugegeben werden. Die Vulkanisationsbeschleuniger und Vernetzer werden in Mengen von im Bereich von 0,1-10 Gew.-%, bevorzugt im Bereich von 0,1 bis 5 Gew.-%, bezogen auf die Gesamtmenge an eingesetzten Kautschuken, eingesetzt.

In einer besonders bevorzugten Ausführungsform enthalten die erfindungsgemäßen Kautschukmischungen neben den erwähnten Kautschuken, den Füllstoffen, 1,4-Butendiol und/oder 1,4-Butendiolpolyether, den Kautschukhilfsmitteln und Vernetzern noch im Bereich von 0,5 bis 15 Gew.-Teile, bezogen auf 100 Gew.-Teile an eingesetzten Kautschuken, schwefelhaltige Silylether als Füllstoffaktivatoren, insbesondere Bis-(trialkoxisilyl-alkyl)-polysulfide, wie in DE-A-2 141 159 und DE-A-2 255 577 beschrieben, und/oder ologimere und/oder polymere schwefelhaltige Silylether, wie in DE-A-4 425 311 und EP-A1-0 670 347 beschrieben, und/oder Mercaptoalkyltrialkoxisilane, wie Mercaptopropyltriethoxisilan, und/oder Thiocyanatoalkylsilylether, wie in DE-A-1 9 544 469 beschrieben.

Die erfindungsgemäßen Kautschukmischungen können in den üblichen Apparaturen hergestellt werden, wie Mischaggregaten, insbesondere Walzen, Innenmischern und Mischextrudern.

Die Vulkaniation der erfindungsgemäßen Kautschukmischungen kann üblicherweise bei Temperaturen im Bereich von 100 bis 200°C, bevorzugt im Bereich von 130 bis 180°C, gegebenenfalls bei Drücken im Bereich von 10 bis 200 bar, erfolgen.

Die erfindungsgemäßen 1,4-Butendiol und/oder 1,4-Butendiolpolyether enthaltenden Kautschukmischungen zeichnen sich insbesondere durch eine gute Fließfähigkeit, hohe Verarbeitungssicherheit sowie verbesserter Vulkanisationskinetik aus und liefern Vulkanisate mit hohen Spannungswerten. Sie eignen sich daher insbesondere zur kostengünstigeren Herstellung von hochverstärkten, abriebbeständigen Formkörpern, insbesondere Reifen und Reifenbauteilen.

Als Formkörpern werden insbesondere genannt: Kabelmäntel, Schläuche, Treibriemen, Förderbänder, Walzenbeläge, Reifen, Schuhsohlen, Dichtungsringe und Dämpfungselemente. Ganz besonders bevorzugt ist die Verwendung der erfindungsgemäßen Kautschukmischungen zur Herstellung von rollwiderstandsarmen Reifenlaufflächen.

### Beispiel

Die Polyether auf Basis 1,4-Butendiol lassen sich gemäß Houben-Weyl, Methoden der organischen Chemie, Band XIV/ 2, Thieme Verlag, Stuttgart, 1963, Seiten 436 - 440, 450 herstellen. Die angegebenen Mengen beziehen sich auf Gewichtsteile.

In einem 1,5 1 Innenmischer (70 UpM, Starttemperatur 80°C, 5 Minuten Mischzeit) wurden die nachfolgenden Kautschukmischungen hergestellt. Schwefel und Beschleuniger wurden zum Schluss auf einer Walze (Temperatur: 50°C) zugemischt.

**Tabelle**

| | Vergleich A | Beispiel 1 |
|---|---|---|
| L-SBR Buna® VSL 5025-1 (ölverstreckter Kautschuk der Bayer AG) | 96 | 96 |
| BR-Kautschuk Buna CB24 (Bayer AG) | 30 | 30 |
| Vulkasil®S (gefällte Kieselsäure der Bayer AG) | 80 | 80 |
| Russ Corax®N 339 | 6,5 | 6,5 |
| Silan Si®1849-1 (aromatisches Mineralöl der BP) | 8 | 8 |
| ZnO | 2,5 | 2,5 |
| Stearinsäsure | 1 | 1 |
| Vulkanox®4020 (Bayer AG) | 1 | 1 |
| Ozonschutzwachs Antilux®654 (Rheinchemie) | 1,5 | 1,5 |
| 4,2-fach propoxyliertes cis-1,4-Butendiol, mittleres Molgewicht 330 | 0 | 4 |
| OH-Zahl 340, Viskosität 60 cP bei 25°C Schwefel | 1,5 | 1,5 |
| Vulkacit®CZ (Sulfenamid-Beschleuniger der BayerAG) | 1,5 | 1,5 |
| Vulkacit®D (Diphenylguanidin-Beschleuniger der Bayer AG) | 2 | 2 |
| | | |
| Mischungsviskositäten ML 1+4 bei 100°C: | 99 | 88 |
| Mooney Anvulkanisation in Minuten, t5/130°C (DIN 53.523) | 17,1 | 19,5 |
| Rheovulkameter (180°C/90 bar/3 Minuten), Volumen in ml | 0,74 | 1,1 |
| | | |
| Vulkanisation bei 160°C / 28 Minuten | | |
| | | |
| Zugfestigkeit (MPa) | 18,8 | 19,6 |
| Bruchdehnung (%) | 386 | 413 |
| Spannungswert bei 300 % Dehnung (MPa) | 12,9 | 13,9 |
| Rückprallelastizität bei 23°C (%) | 32 | 32 |
| Weiterreißfestigkeit in N/mm (DIN 53 515) | 36,9 | 53,5 |
| Abrieb in ccm (DIN 53 516) | 75 | 77 |
| Härte Shore A bei 23°C | 68 | 68 |

## Patentansprüche

1. Kautschukmischungen bestehend aus mindestens einem Kautschuk, 0,05 bis 25 Gew.-Teilen, bezogen auf 100 Gewichtsteile an eingesetztem Kautschuk, 1,4-Butendiol oder 1,4-Butendiolpolyether oder Mischungen derselben, wobei der Butendiolpolyether der Struktur 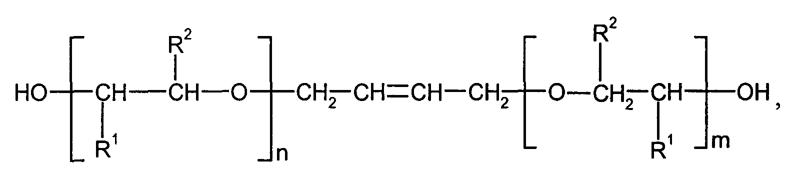 worin
R¹ und R² unabhängig voneinander für Wasserstoff oder einen C₁ bis C₄-Alkylrest stehen und
n und m unabhängig voneinander für ganze Zahlen von 0 bis 10, bevorzugt 0 bis 5 stehen, mit der Maßgabe, dass n und m nicht gleichzeitig 0 sein können,
entspricht, sowie 1 bis 500 Gewichtsteile Füllstoff, bezogen auf 100 Gewichtsteile an eingesetztem Kautschuk.

2. Verwendung der Kautschukmischungen nach Anspruch 1 zur Herstellung von Vulkanisaten und Kautschukformkörpern aller Art, insbesondere zur Herstellung von Reifen und Reifenbauteilen.
